# EUROPÄISCHE PATENTSCHRIFT

(11) **EP 2 152 400 B1**
(45) Veröffentlichungstag und Bekanntmachung des Hinweises auf die Patenterteilung: **25.08.2010**
(21) Anmeldenummer: 08749239.3
(22) Anmeldetag: 30.04.2008
(51) Int. Cl.: B01J 13/00

(54) **METALLSALZ-NANOGEL ENTHALTENDE POLYMERE**
METAL SALT NANOGEL-CONTAINING POLYMERS
POLYMÈRES CONTENANT DES NANOGELS DE SELS MÉTALLIQUES

(30) Priorität: 02.05.2007 DE 102007020523
(43) Veröffentlichungstag der Anmeldung: 17.02.2010
(73) Patentinhaber: Helling Innovation UG (haftungsbeschränkt), 51519 Odenthal (DE)
(72) Erfinder: HELLING, Günter, 51519 Odenthal (DE)
(74) Vertreter: Michalski Hüttermann & Partner Patentanwälte
(86) Internationale Anmeldenummer: PCT/EP2008/003490
(87) Internationale Veröffentlichungsnummer: WO 2008/135212

(56) Entgegenhaltungen:
- EP-A- 1 153 936
- WO-A-00/31172
- WO-A-02/24757
- WO-A-03/002164
- WO-A-2004/110610
- US-A- 6 022 727
- DATABASE WPI Week 200560 Thomson Scientific, London, GB; AN 2005-585525 XP002490450 & JP 2005 206752 A (NIPPON ZEON KK) 4. August 2005 (2005-08-04)

## Beschreibung

Die Erfindung betrifft ein Verfahren zur Herstellung von Metallsalz-Nanogel enthaltenden wasserfesten Polymerisations- Polykondensations- oder Polyadditionsprodukten, sowie unter Verwendung dieses Verfahrens herstellbare Produkte sowie deren Verwendung als Formkörper, Beschichtungsmassen, Folien, Fasern oder als Masterbatch zur antimikrobiellen Ausrüstung von Kunststoffen, als Sauerstoffbarriere, als Feuchtebarriere, als Barriere für chemische Verbindungen oder zur Absorption von elektromagnetischer oder von radioaktiver Strahlung.

In US 6,226,890 werden Schichten als Feuchtigkeitsbarneren beschrieben, die aus einem polymeren Binder und einem eindispergierten Trockenmittel mit einer Teilchengröße von 0,1 bis 200 Mikrometer bestehen. Als Trockenmittel werden beispielsweise Metalloxide oder Metallhalogenide genannt. Nachteilig an Schichten die aus diesem Dispersionen erhalten werden ist die hohe Trübung, die einen Einsatz für optisch transparente Materialien oder Folien verhindert.

In US 6,503,587 werden als Sauerstoffsperre Beschichtungen aus einem Polymer mit eindispergierten Eisenteilchen mit Teilchengrößen von 1 bis 150 µm beschrieben. Zur Einbringung der Eisenteilchen in das Polymer ist ein aufwändiges Einbringverfahren erforderlich. Außerdem sind die mit diesen Mischungen erhaltenen Schichten trübe.

Aus DE 101 46 050 ist bekannt, Silbernanopartikel in Kombination von Metallsalzen als Biozid in Kleb- und Beschichtungsstoffen zu verwenden. Die Metallsalze sollen die Wirksamkeit der Silbernanopartikel erhöhen. Die dort für die Herstellung solcher Materialien gezeigten Verfahren haben sich bezüglich der reproduzierbaren und homogenen Verteilung der Beschichtungsstoffe in der Schicht als unbefriedigend erwiesen.

In DE 19707221 werden antibakterielle und fungizide Metallionen enthaltende Polymerisatdispersionen beschrieben, die als Schutzpolymerisat für andere kolloide Systeme verwendet werden. Die Herstellung erfolgt durch direkte Copolymerisation von monoethylenischen ungesättigten Mono- oder Dicarbonsäuren wie Acrylsäure mit wasserunlöslichen polymerisierbaren Verbindungen nach einem Emulsionspolymerisationsverfahren. Die Metallionen werden durch Behandlung mit schwerlöslichen Schwermetallsalzen eingeführt. Das Abmischverhalten derart hergestellter Metallionen enthaltender Polymerisate mit der zu schützenden Polymerdispersion ist jedoch unbefriedigend, da insbesondere bei höheren Metallionengehalten häufig Flockungen auftreten und die erhaltenen abgemischten Dispersionen eine ungenügende Langzeitstabilität aufweisen. Dieses Verfahren ist zur Herstellung von stabilen Dispersionen deshalb nur eingeschränkt geeignet.

Aus DE 60102291 sind Kunststoffmaterialien beschrieben, die ionische Kupferoxidteilchen zur antimikrobiellen Ausrüstung enthalten. Die Partikel sind 1 bis 10 Mikrometer groß und ragen aus der Kunststoffoberfläche hinaus. Eine glatte transparente Kunststoff- oder Folienoberfläche ist mit diesen Teilchen nicht erzielbar.

In DE 69806071 werden Polykondensationsprodukte beschrieben, die sauerstoffentfemende Teilsegmente enthalten. Die Möglichkeit aus diesen Materialien Barriereschichten für Sauerstoff herzustellen ist aber stark eingeschränkt, da nur Kunststoffe verwendet werden können die diese Teilsegmente in hohem Maße enthalten.

In DE 60108670 werden Kunststofffolien mit Geruchsbarriereeigenschaften beschrieben, indem in die Kunststoffe Bis-Fettsäureamide eingearbeitet werden. Nachteilig an diesen Folien ist die stark eingeschränkte Verträglichkeit vieler Kunststoffe für Bis-Fettsäureamide. So kann es insbesondere bei Lagerung und Temperaturschwankungen zum Ausschwitzen der eingelagerten Bis-Fettsäureamide kommen.

Aus US 4,426,438 sind mehrwertige Metallkationen enthaltende anionische Mischpolymerisate, ihre Herstellung und ihre Verwendung in fotografischen Materialien beschrieben. Die Mischpolymerisate werden zusammen mit wasserlöslichen Polymeren als Bindemittel in transparenten Beschichtungen verwendet. Folien oder Beschichtungen aus diesen Gemischen sind wasserempfindlich oder wasserlöslich und als robuste Gebrauchsmaterialien nicht geeignet.

Es besteht daher Bedarf für ein einfaches und kostengünstiges Verfahren zur Herstellung von Kunststofferzeugnissen, die Metallsalz-Nanogele in einer homogenen Verteilung enthalten.

Aufgabe der Erfindung ist es somit, ein solches Verfahren zu finden, das die Nachteile des Standes der Technik nicht aufweist.

Das erfindungsgemäße Verfahren besteht zunächst darin, eine wässrige Dispersion aus Metallsalz-Nanogelen mit einer wässrigen Dispersion eines Polymerisations-, Polykondensations- oder Polyadditionsproduktes abzumischen. Die sich dabei bildende mit Metallsalz-Nanogel modifizierte wässrige Dispersion kann z.B. für Beschichtungszwecke direkt verwendet werden und wird dann erst getrocknet. Die Trocknung kann aber auch direkt nach dem Abmischen erfolgen. Die fertige Beschichtung bzw. das fertige Kunststoffprodukt gemäß der Erfindung wird nach der Trocknung und insbesondere durch anschließendes einfaches Erhitzen erhalten und weist eine sehr gute, homogene Verteilung des Metallsalz-Nanogels im Kunststoffprodukt auf. Die wässrige Dispersion kann auch zu einem Zwischenprodukt getrocknet werden, das erst später zu der gewünschten Beschichtung bzw. dem gewünschten Produkt weiterverarbeitet wird.

Die Gegenstände der Erfindung und deren bevorzugte Ausführungen sind in den unabhängigen und den davon abhängigen Ansprüchen beschrieben.

Gegenstand der vorliegenden Erfindung ist ein Verfahren zur Herstellung einer Metallionen enthaltenden wässrigen Dispersion (**D-III**), dadurch gekennzeichnet, dass eine wässrige Metallsalz-Nanogel enthaltende Dispersion (**D-I**) mit einer wässrigen Dispersion (**D-II**) eines Polymerisations-, Polykondensations- oder Polyadditionsproduktes abgemischt wird und wobei aus Dispersion (**D-III**) durch Trocknung, insbesondere gefolgt durch Erhitzen, ein wasserfestes Produkt erhalten werden kann. Das so herstellbare wasserfeste Produkt kann als solches Verwendung finden oder Teil eines Materialverbunds sein, z.B. eine wasserfeste Beschichtung oder ein wasserfestes Bauteil.

Ein wasserfestes Produkt im Sinne der Erfindung zeichnet sich insbesondere dadurch aus, dass es in Wasser nicht löslich oder wenig quellbar ist. Nicht löslich bedeutet, dass das Produkt bei 24-stündiger Behandlung mit Wasser und anschließender Trocknung bei Raumtemperatur eine Gewichtsabnahme von weniger als 5 Gew.-% vorzugsweise weniger als 0,5 Gew.-% eintritt. Wenig quellbar bedeutet, dass bei 24-stündiger Behandlung des Produktes mit Wasser eine Gewichtszunahme von kleiner 10 Gew.-% vorzugsweise kleiner 2 Gew.-% eintritt.

Gegenstand der Erfindung ist auch eine Metallsalz-Nanogel enthaltende wässrige Dispersion, dadurch gekennzeichnet, dass sie Metallsalz-Nanogel und Teilchen eines Polymerisations-, Polykondensations- oder Polyadditionsproduktes umfasst und die bevorzugt mit dem zuvor beschriebenen Verfahren hergestellt wird.

Gegenstand der Erfindung ist auch ein Verfahren zur Herstellung von Metallsalz-Nanogel enthaltenden wasserfesten Polymerisations- Polykondensations- oder Polyadditionsprodukten, sowie nach diesem Verfahren hergestellte Produkte zur Verwendung als Formkörper, Beschichtungsmassen, Folien, Fasern oder als Masterbatch zur antimikrobiellen Ausrüstung von Kunststoffen, als Sauerstoffbarriere, als Feuchtebarriere, als Barriere für chemische Verbindungen, zur Absorption von elektromagnetischer oder von radioaktiver Strahlung.

Unter Metallsalz-Nanogel sind im Sinne der Erfindung alle polymeren Teilchen mit einen Durchmesser der volumengleichen Kugel von maximal etwa 500 nm zu verstehen, die wenigstens ein anionisch geladenes Polymer und als Gegenionen positive Ionen, insbesondere wenigstens eines Metalls oder eines Metallkomplexes aufweisen. Der Durchmesser der Teilchen ist vorzugsweise kleiner als 200 nm und besonders bevorzugt kleiner als 80 nm. Es hat sich zudem als vorteilhaft gezeigt, wenn deren Durchmesser mindest etwa 5 nm, insbesondere mindestens etwa 10 nm beträgt. Besonders bevorzugte polymere Metallsalz-Nanogel Teilchen weisen einen Durchmesser der volumengleichen Kugel von etwa 5 nm bis etwa 200 nm auf.

Die für das erfindungsgemäße Verfahren geeigneten Metallsalz-Nanogel enthaltenden Dispersionen (**D-I**) werden vorzugsweise in einem Verfahren hergestellt, das wenigstens die folgenden drei Stufen in der angegebenen Reihenfolge umfasst. Vor, zwischen und nach diesen Verfahrensstufen können weitere Verfahrensschritte durchgeführt werden, z.B. die Zugabe von Additiven, Konzentrations- oder Waschschritte.

In Stufe 1 wird eine wässrige vernetzte Acryl- oder Methacrylsäureesterdispersion mit einer Teilchengröße von maximal etwa 500 nm hergestellt. Die Herstellung erfolgt bevorzugt durch eine Emulsionscopolymerisation, wobei zumindest ein ethylenisch ungesättigter Carbonsäureester, insbesondere ein Acrylsäure- oder Methacrylsäureester, in Gegenwart wenigstens eines bi- oder polyfunktionellen vernetzend wirkenden Monomers und wenigstens eines Emulgators polymerisiert wird.

Besonders bevorzugt werden als ethylenisch ungesättigte Carbonsäureester die Ester aliphatischer, insbesondere kurzkettiger Alkohole verwendet, wobei unter kurzkettig zu verstehen ist, dass der Alkoholrest maximal 12 C-Atome, bevorzugt maximal 6 C-Atome und besonders bevorzugt von 1 bis 4 C-Atome umfasst.

Als bi- oder polyfunktionelle vernetzende Monomere eignen sich besonders Monomere mit zwei oder mehreren ethylenisch ungesättigten Gruppen im Molekül. Besonders vorteilhafte Beispiele solcher Monomere sind Allylverbindungen wie beispielsweise Allylether, von denen Tetraallyloxiethan besonders gute Ergebnisse liefert. Außerdem eignen sich besonders Alkene oder Cycloalkene mit zwei oder mehreren Doppelbindungen. Die Verwendung von Divinylbenzol oder bi- und polyfunktionellen Acrylaten hat sich demgegenüber als weniger vorteilhaft erwiesen.

Der Anteil an vernetzendem Monomer bezogen auf die gesamte Monomermenge beträgt bevorzugt mehr als etwa 0,5 Mol-%, insbesondere mehr als etwa 1 Mol-% und in besonders bevorzugter Weise wenigstens etwa 3 Mol %. Bei geringen Anteilen an vernetzenden Monomeren werden bei der Verseifung hochviskose Gele erhalten, die für die weitere Verarbeitung nach dem erfindungsgemäßem Verfahren weniger geeignet sind. Um einen möglichst hohen Metallionengehalt ohne Flockung zu erreichen, beträgt der Anteil an vernetzendem Monomer jedoch bevorzugt nicht mehr als 20 Mol-%, insbesondere nicht mehr als 10 Mol-%.

Als Emulgatoren sind anionische und/oder nichtionische oberflächenaktive Verbindungen besonders geeignet, kationische Emulgatoren dagegen weniger.

Die Emulsionscopolymerisation erfolgt bevorzugt in wässrigem Medium, wobei das Wasser bevorzugt überwiegt und weniger als etwa 50 Gew.-% weitere in der eingesetzten Menge mit Wasser mischbare Lösungsmittel enthalten kann.

In Stufe 2 wird die gemäß Stufe 1 erhaltene vernetzte Methacrylat- oder Acrylatdispersion unter Verwendung von basischen Verbindungen wie beispielsweise Alkalimetallhydroxid oder Ammoniumhydroxid hydrolysiert. Es entstehen anionische Nanogele mit Alkali- oder Ammoniumgegenionen.

In Stufe 3 werden die in Stufe 2 eingeführten Alkali- oder Ammoniumionen durch mehrwertige Kationen ausgetauscht. Der Ionenaustausch kann durch Zusatz von wasserlöslichen Salzen mehrwertiger Metalle, insbesondere in wässriger Lösung vorliegend, oder durch mit mehrwertigen Metallionen beladene Kationenaustauscher erfolgen.

Metallsalz-Nanogel enthaltende Dispersionen (**D-I**), die nach diesem wenigstens dreistufigen Verfahren hergestellt werden, erlauben den Einbau hoher Mengen an Metallionen und es wurde gefunden, dass sie sich auch dann noch im Gegensatz zu anders hergestellten Dispersionen hervorragend zur Abmischung mit wässrigen Dispersionen **(D-II)** eignen, dabei nicht zur Flockung und unerwünschten Viskositätserhöhungen neigen und so langzeitstabile Dispersionen **(D-III)** ohne unerwünschte Agglomerate erhalten werden können.

Die anionisch geladenen Polymere weisen bezüglich der Gesamt-Molmenge der in dem Polymer enthaltenen Monomere üblicherweise von etwa 1 bis 100 Mol-%, bevorzugt von etwa 20 bis 100 Mol-% und besonders bevorzugt von etwa 50 bis 85 Mol-% kovalent gebundene anionische Gruppen auf.

Von der Gesamt-Molmenge der Gegenionen machen in einer bevorzugten Ausführungsform der Erfindung zwei- und/oder mehrwertige Ionen vorzugsweise von etwa 1 bis 100 Mol-%, insbesondere von etwa 20 bis 100 Mol-% und besonders bevorzugt von etwa 50 bis 98 Mol-% aus. Die dabei zu 100 Mol-% fehlende Menge an Gegenionen wird z.B. durch einwertige positive Ionen (z.B. Metallionen, Metallkomplexe oder Ammoniumionen) und/oder durch kovalent an das Polymer gebundene positive Gruppen gebildet.

Bei einer anderen bevorzugten Ausführungsform der Erfindung umfassen die Gegenionen von etwa 1 bis 100 Mol-%, insbesondere von etwa 20 bis 100 mol-% Ag(+).

Bevorzugte erfindungsgemäße Metallsalz-Nanogele, die zwei- oder mehrwertige Metallionen aufweisen, sind aus DE 3002287 bekannt und können nach den dort beschriebenen Methoden hergestellt werden. Bevorzugte Metallsalz-Nanogele lassen sich durch die nachfolgende allgemeine Formel beschreiben: 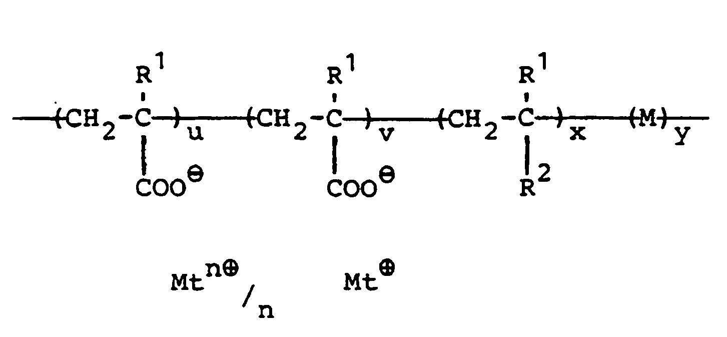 worin bedeuten
- R¹: Wasserstoff, Methyl oder Carboxymethyl,
- R²: den Rest einer organischen Vernetzerverbindung mit mindestens einer weite- ren copolymerisierbaren oder copolymerisierten C-C-Doppelbindung,
- M: polymerisierte Einheiten eines mit Acrylsäure , Methacrylsäure, Acrylsäure- ester oder Methacrylsäureester copolymerisierbaren ethylenisch ungesättigten Monomers
- Mt^{n⊕}: ein n-wertiges Metallkation mit n = 2, 3 oder 4
- Mt^{⊕}: insbesondere ein Alkalimetallkation oder ein Ammoniumkation
- u,v,x,y: die molaren Anteile der in dem Mischpolymerisat enthaltenden polymerisier- ten Monomeren in Mol % und zwar im einzelnen:
- u: 5-99 Mol %, vorzugsweise 10-90 Mol %
- x: 0,5-10 Mol %, vorzugsweise 1-5 Mol %
- v+y: 0-94,5 Mol %, vorzugsweise 0-85 Mol %

Bevorzugt verwendete Metallionen Mt^{n⊕} sind mehrwertige Ionen von Magnesium, Calcium, Strontium, Barium, Eisen, Kobalt, Nickel, Kupfer, Zink, Blei, Cadmium, Zinn, Quecksilber, Wismut, Gold, Uran, Aluminium, Antimon, Cer, Chrom, Europium, Gallium, Germanium, Indium, Lutetium, Mangan, Neodym, Osmium, Palladium, Platin, Plutonium, Radium, Rhenium, Rhodium, Rubidium, Ruthenium, Samarium, Scandium, Tantal, Tellur, Terbium, Thallium, Thorium, Thulium, Titan, Wolfram, Uran, Vanadium, Ytterbium, Zircon.

Besonders bevorzugt verwendete Metallionen Mt^{n⊕} sind mehrwertige Ionen von Eisen, Kobalt, Nickel, Kupfer, Zink, Blei, Aluminium, Palladium und Platin.

Die Metallionen können auch als Hydrat, Amin- oder andere Komplexe vorliegen.

In einer bevorzugten Ausführungsform sind die gemäß der Erfindung herstellbaren wasserfesten Produkte wie beispielsweise Kunststoffgegenstände, Folien oder Beschichtungen optisch transparent. Unter Transparenz im Sinne der Erfindung wird verstanden, dass unterhalb der Folie oder Beschichtung befindliche Texte, Bilder oder Gegenstände klar erkennbar sind.

In einer weiteren bevorzugten Ausführungsform der vorliegenden Erfindung wird die erfindungsgemäße Dispersion einer Anstrichfarbe, einer Lasur, einer Grundierung oder einem Holzschutz zugesetzt, um so entsprechende erfindungsgemäße Produkte mit antimikrobieller Wirkung, Absorptions- oder Barriereeigenschaften zu erhalten.

Eine wässrige Dispersion im Sinne der Erfindung ist eine Dispersion, die als äußere Phase als Hauptbestandteil Wasser enthält. Das Wasser kann zu weniger als 50 Gew.-%, vorzugsweise zu weniger als 20 Gew.-% wassermischbare organische Lösungsmittel wie beispielsweise Methanol, Ethanol, i-Propanol, n-Propanol, Aceton, Tetrahydrofuran, Dioxan, Dimethylformamid, Formamid oder N-Methylpyrrolidon enthalten.

Die Polymerdispersionen können auch hochsiedende oder niedrigsiedende wasserunlösliche Lösungsmittel enthalten. Die hochsiedenden Lösungsmittel werden in einer Menge von 0,01 bis 50 Gew.-%, bezogen auf das Polymer, eingesetzt. Besonders bevorzugt ist ein Bereich von 0,1 - 30 Gew.-%. Beispiele für hochsiedende Lösungsmittel sind Phthalsäureester wie Dibutylphthalat, Dinonylphthalat, Diethylhexylphthalat, Phosphorsäureester wie Tricresylphosphat, Adipinsäureester wie Adipinsäuredioctylester, Adipinsäuredibutylester. Die niedrigsiedenden Lösungsmittel werden in einer Menge von 0,01 bis 100 Gew.-%, bezogen auf das Polymer, eingesetzt. Besonders bevorzugt ist ein Bereich von 1,0 bis 50 Gew-%. Die niedrigsiedenden Lösungsmittel werden vorzugsweise nur während des erfindungsgemäßen Verfahrens zur Herstellung von nanoscaligen Silber- oder Silberhalogenidteilchen enthaltenden Polymerisations- Polykondensations- oder Polyadditionsprodukten eingesetzt. Sie werden beim Trocknungsprozess zusammen mit dem Wasser wieder entfernt. Beispiele für niedrigsiedende Lösungsmittel sind n-Hexan, n-Heptan, Cyclohexan, Ethylacetat, Methylacetat, Methylenchlorid, Methanol, Ethanol, Isopropanol, Dioxan, Acetonitril, Tetrahydrofuran, Chloroform, Benzol, Toluol. Die Verwendung von Gemischen aus niedrig- und hochsiedenden Gemischen ist möglich.

Das Gewichtsverhältnis von Metallsalz-Nanogel zu den Polymerisations- Polykondensations- oder Polyadditionsprodukten kann in weiten Bereichen variieren. Bevorzugt ist ein Gewichtsverhältnis von Metallsalz-Nanogel zu Polymerisations- Polykondensations- oder Polyadditionsprodukten von 0,5 bis 10⁻¹⁰ zu 1 und besonders bevorzugt ein Verhältnis von 0,2 bis 10⁻⁶ zu 1.

Die erfindungsgemäße Dispersion kann z.B. für Beschichtungszwecke verwendet werden und dazu mit üblichen Methoden auf beliebige Gegenstände aufgetragen werden. So können z.B. medizinische Geräte durch übliche Methoden wie Besprühen, Tauchen oder Bestreichen antimikrobiell beschichtet und wie nachfolgend beschrieben durch einfaches Trocknen und Erhitzen mit einem effizienten antimikrobiellen Schutz versehen werden.

Vorteilhaft können auch Gegenstände des täglichen Gebrauchs, wie z.B. Griffe (z.B. Tür- und Fenstergriffe), Schalter wie z.B. Lichtschalter, Geländer, wie z.B. Treppengeländer, Tastenkappen, Tastaturen, Toilettendeckel, Toilettenbürsten, Duscharmaturen, Telefonhörer, Kinderspielzeug, insbesondere Plastikspielzeug, Folien, Fasern, Gewebe, Textilien oder andere häufig berührte Oberflächen mit einem Schutz gemäß der vorliegenden Erfindung überzogen werden, und/oder ein wasserfestes Produkt gemäß der Erfindung umfassen, wodurch z.B. einer hartnäckigen Anhaftung von Krankheitserregern auf solchen Oberflächen entgegengewirkt wird. Dies vermeidet insbesondere in öffentlichen Bereichen, wie z.B. in Toiletten, und ganz besonders in Schwimmbädern und Krankenhäusern, eine erhebliche Infektionsgefahr und kann eine regelmäßig notwendige Desinfizierung ersetzen oder zumindest deren notwendige Häufigkeit verringern oder weniger aggressive Desinfektionsmittel ermöglichen.

Im Baubereich wird die erfindungsgemäße Dispersion vorteilhaft zur Bekämpfung und Vorbeugung von Schimmelbefall eingesetzt, indem die Wände oder Wandbekleidungen mit der erfindungsgemäßen Dispersion behandelt werden. Vorteilhaft werden auch Dichtmassen, Dachpfannen und Dämmmaterialien damit antimikrobiell ausgestattet.

Weiterhin ist es vorteilhaft, Behälter und Geräte für die Pflanzenzucht sowie generell keimfrei zu haltende Behälter wie z. B. Petrischalen mit Hilfe der erfindungsgemäßen Dispersion antimikrobiell auszustatten.

Außerdem wird die erfindungsgemäße Dispersion zur Beschichtung von Folien oder Gegenständen verwendet um Barriere- und/oder Absorptionseigenschaften gegenüber Sauerstoff, Feuchte oder anderen gasförmigen Substanzen zu erzielen. Die Metallsalze werden entsprechend der gewünschten Barnerewirkung ausgewählt. Beispielsweise werden erfindungsgemäße Dispersionen mit Eisen-II-salz-Nanogel als Sauerstoff- oder Ozonbarriere verwendet. Beschichtungen mit Kupfer-II- und Zink-II-salz-Nanogel eignen sich als Barriere für übelriechende Verbindungen wie Schwefelwasserstoff, Mercaptane, Amine oder Ammoniak. Schichten mit dehydratisierten Metallionen sind als Feuchtigkeitsbarriere geeignet. Schichten mit Schwermetallionen wie beispielsweise Bleiionen sind zur Abschwächung von radioaktiven Strahlen geeignet.

Bei geeigneter und mit üblichen Experimenten leicht erreichbarer Auswahl der Metallionen und der Restfeuchte im Material läßt sich mit den erfindungsgemäßen Materialien auch eine definierte antistatische Wirkung einstellen.

Zudem ist es möglich, durch Licht absorbierende Metallionen bzw. deren Komplexe eine optische Filterwirkung im sichtbaren, UV- oder Infrarotbereich zu erzielen.

Ebenfalls ist es möglich, Gemische von erfindungsgemäßen Dispersionen mit unterschiedlichen Metallionen und/oder unterschiedlichen polymeren Gegenionen zu verwenden. Auf diese Weise können in einer Schicht mehrere Funktionalitäten wie beispielsweise bakterizide Oberflächen mit Barriereeigenschaften kombiniert werden.

Bei der Verwendung der erfindungsgemäßen Dispersionen für Barnerezwecke können die Barrierebeschichtungen mit anderen bekannten Barrierematerialien oder Barrierefolien aus Ethylen-Vinylalkohol-Copolymer oder Polyvinylidenchlorid-Copolymer kombiniert werden. Beispielsweise kann eine Ethylen-Vinylalkohol-Cöpolymer Folie mit einer erfindungsgemäßen Eisen-II-ionen enthaltenden Dispersion beschichtet werden um die bekannte geringe Sauerstoffdurchlässigkeit von Ethylen-Vinylalkohol-Copolymer weiter zu vermindern.

Um aus der erfindungsgemäßen Dispersion einen Kunststoffgegenstand bzw. eine Kunststoffbeschichtung gemäß der vorliegenden Erfindung zu erhalten, wird zunächst das Wasser aus der Dispersion soweit entfernt, dass ein Wassergehalt von maximal 20 Gew.-%, bevorzugt von maximal 10 Gew.-%, weiter bevorzugt von 5 Gew.-% und insbesondere von maximal 1 Gew.-% verbleibt. Die Entfernung des Wassers wird vorzugsweise durch Abdestillieren oder Trocknung wie beispielsweise Konvektionstrocknung, Strahlungstrocknung, Bandtrocknung, Sprühtrocknung oder Gefriertrocknung durchgeführt.

Das so aus der Dispersion zu erhaltende feste Zwischenprodukt ist ebenfalls ein Gegenstand der vorliegenden Erfindung und kann für die spätere Verwendung gelagert oder direkt zu einem Kunststoffgegenstand weiterverarbeitet werden. Es ist auch möglich, das Zwischenprodukt in Pulverform zu erhalten und für Beschichtungszwecke in dieser Form aufzubringen oder zunächst in Wasser oder Lösungsmitteln, in denen es nicht oder nur zu einem geringen Teil löslich ist, wieder aufzuschlämmen. Außerdem kann das feste Zwischenprodukt nach dem Aufschmelzen in ein Granulat überführt werden und in dieser Form zwischengelagert und weiterverarbeitet werden.

In einer bevorzugten Ausführungsform der vorliegenden Erfindung weist das feste Zwischenprodukt neben dem erfindungsgemäßen Polymerisations-, Polykondensations- oder Polyadditionsproduktes noch wenigstens einen weiteren Kunststoff auf, der schon der wässrigen Dispersion zugesetzt werden kann und nach deren Trocknung im Zwischenprodukt verbleibt. Bevorzugt wird der weitere Kunststoff jedoch mit dem zunächst erhaltenen festen Zwischenprodukt vermischt, um ein bevorzugtes Zwischenprodukt zu erhalten. Der weitere Kunststoff ist bevorzugt nicht mit nanoscaligen polymeren Metallsalzteilchen beladen und ermöglicht durch die Abmischung eine genauere Einstellung der gewünschten Wirkung.

Wie für die Dispersion beschrieben, können auch dem festen Zwischenprodukt entsprechend der beabsichtigte Verwendung noch weitere Zusatzstoffe zugegeben werden, z.B. um dessen Haltbarkeit, Weiterverarbeitbarkeit, Geruch oder auch Aussehen zu verändern.

In einer weiteren bevorzugten Ausführungsform der vorliegenden Erfindung wird das feste Zwischenprodukt einer Anstrichfarbe, einer Beschichtungsmasse, einer Lasur, einer Grundierung, eine oder einem Holzschutz zugesetzt, um so entsprechende erfindungsgemäße Produkte mit antimikrobieller Wirkung, Barriereeigenschaften, Absorption von elektromagnetischer oder radioaktiver Strahlung zu erhalten. Bei wässrigen Anstrichformulierungen wird das Zwischenprodukt vorzugsweise in fester pulverisierter Form in die Anstrichfarbe eindispergiert oder es wird eine wässrige Dispersion aus nanoscaligen polymeren Metallsalzteilchen mit der Anstrichfarbe auf Wasserbasis verrührt. Bei Anstrichfarben auf Lösungsmittelbasis wird das Zwischenprodukt direkt in der Anstrichfarbe gelöst oder vorher in einem organischen Lösungsmittel oder Lösungsmittelgemisch gelöst und dann mit der Anstrichfarbe verrührt. Dabei wird zweckmäßig ein Lösungsmittel oder Lösungsmittelgemisch verwendet, das in der Anstrichfarbe enthalten ist.

Für das feste Zwischenprodukt gemäß der vorliegenden Erfindung sowie dessen Zubereitungen kommen zum Beispiel die selben Anwendungsgebiete in Frage, die vorstehend für die Dispersion beschrieben wurden.

Aus dem festen Zwischenprodukt wird ein Kunststoff bzw. ein Kunststoffgegenstand oder eine Kunststoffbeschichtung gemäß der vorliegenden Erfindung erhalten, indem das Zwischenprodukt Bedingungen ausgesetzt wird, bei denen es zumindest teilweise koalesziert.

Wurde dem Zwischenprodukt ein weiterer Kunststoff zugemischt, z.B. in Form eines Granulates, kann der Kunststoffgegenstand bzw. die Kunststoffbeschichtung auch in der für den weiteren Kunststoff üblichen Verarbeitung hergestellt werden, insbesondere wenn der weitere Kunststoff überwiegt. Vorzugsweise kann ein Granulat oder Pulver des Zwischenproduktes mit einem Granulat des weitem Kunststoffes, vermischt und nach Aufschmelzen nach den bekannten Verfahren wie Extrusion, Coextrusion, Spinnen oder Spritzguss zu Folien, Fasern, Platten, Stangen, Fäden weiterverarbeitet werden. Bei durch Coextrusion hergestellten mehrlagigen Folien werden vorzugsweise nur die äußeren Schichten biozid ausgerüstet oder mit einer Barrierefunktionalität versehen. Beispiele für weitere Kunststoffe sind Polyester, PET, Polycarbonate, Polyurethane, Polyamide, Polyalkylene wie PE, PP, Polystyrol, Poly(meth-)acrylate, ABS, Cellulosetriacetat, Fluorpolymere, Polyether, POM, Elastomere.

Für den Kunststoffgegenstand bzw. die Kunststoffbeschichtung gemäß der vorliegenden Erfindung kommen zum Beispiel die selben Anwendungsgebiete in Frage, die vorstehend für die Dispersion beschrieben wurden. Bei Produkten, wie den dort beispielhaft genannten antimikrobiell ausgestatteten Gegenständen des täglichen Gebrauchs, wie z.B. Tür- und Fenstergriffen, Glas- oder Kunststoffscheiben, Brillengläser, Kontaktlinsen, Lebensmittelfolien, Elektronikschutzfolie, Medikamentenverpackung, Lichtschaltern, Treppengeländern, Tastaturen, Toilettendeckeln, Toilettenbürsten, Duscharmaturen, Telefonhörern, Kinderspielzeug, insbesondere Plastikspielzeug, Folien, Fasern, Gewebe, Textilien oder anderen häufig berührten Oberflächen, Wandbeschichtungen, Wandbekleidungen, Dichtmassen, Dachpfannen und Dämmmaterialien, Behälter und Geräte für die Pflanzenzucht sowie generell keimfrei zu haltender Behälter oder Umhüllungen wie z.B. Petrischalen, Wassertanks, Wasserrohre oder Isolierzelte, handelt es sich um erfindungsgemäße Kunststoffgegenstände, wenn die Produkte wenigstens teilweise aus einem erfindungsgemäßen Kunststoff bestehen oder damit beschichtet sind.

Den nach dem erfindungsgemäßen Verfahren hergestellten Produkte können die bei Polymeren üblicherweise verwendeten Additive wie beispielsweise Stabilisatoren, UV-Absorber, Farbstoffe, optische Aufheller, Metall- oder Metalloxidnanopartikel, Weichmacher, Gleitmittel oder Pigmente zugesetzt werden. Der Zusatz der Additive kann während des Herstellungsverfahrens oder danach erfolgen.

Die nach dem erfindungsgemäßen Verfahren hergestellten Produkte können mit anderen Polymerisations- Polykondensations- oder Polyadditionsprodukten abgemischt werden. Durch Beschichtungsverfahren oder Coextrusionsverfahren können auch Folien hergestellt werden, bei denen nur die obere und/oder untere Schicht nanoscalige polymere Metallsalzteilchen enthalten/enthält.

Die nach dem erfindungsgemäßen Verfahren hergestellten Produkte können noch einen Restanteil Wasser enthalten. Der Wasseranteil bezogen auf die Polymerisations- Polykondensations- oder Polyadditionsprodukte liegt bevorzugt unter 10 Gewichtsprozent und insbesondere unter 2 Gewichtsprozent. Bei Verwendung der erfindungsgemäßen Produkte als Feuchtigkeitsbarriere liegt der Wasseranteil vorzugsweise unter 0,1 Gewichtsprozent.

Die Entfernung des Wassers aus der erfindungsgemäßen Dispersion und die Einleitung der Koaleszenz können auch in einem Verfahrensschritt, z.B. bei genügend hoher Temperatur, durchgeführt werden. Wenn die Glas- bzw. Schmelztemperatur des Polymerisations-, Polykondensations- oder Polyadditionsproduktes unterhalb der Raumtemperatur liegt, ist ein Erhitzen nicht unbedingt erforderlich. Das Zusammenschmelzen kann dann bei Raumtemperatur erfolgen.

Unter Koaleszenz ist zu verstehen, dass die im Zwischenprodukt enthaltenden polymeren Partikel langsam zusammenfließen und verkleben oder verschmelzen, was unter dem Licht- oder Elektronenmikroskopaufnahmen erkennbar ist. Dieser Vorgang wird auch als Filmbildung bezeichnet. Bevorzugt sind bezogen auf die Anzahl wenigstens 20 % der Teilchen, besonders bevorzugt wenigstens 50 % der Teilchen und weiter bevorzugt wenigstens 70 % der Teilchen koalesziert.

Die Koaleszenz kann z.B. durch Druckeinwirkung herbeigeführt werden, bevorzugt ist jedoch, das Zwischenprodukt einer Temperatur auszusetzen, die hoch genug ist um zu der Koaleszenz zu führen.

Dieser Vorgang erfolgt üblicherweise oberhalb der Glastemperatur des Polymerisations-, Polykondensations- oder Polyadditionsproduktes und insbesondere in der Nähe bis oberhalb von dessen Schmelzpunkt

Die für die Herstellung der erfindungsgemäßen Dispersionen verwendeten wässrigen Dispersionen eines Polymerisations- Polykondensations- oder Polyadditionsproduktes sind bekannt und werden auch unter der Bezeichnung Polymerlatex in der Literatur beschrieben.

Die wässrige Dispersion eines Polymerisationsproduktes kann, wie beispielsweise in "Giesla Henrici-Olive-S.Oliver Polymerisation Verlag Chemie 1969 Kap. 1.11.3. Emulsionspolymerisation" beschrieben, nach einem Emulsionspolymerisationsverfahren erhalten werden. Eine ethylenisch ungesättigte Verbindung, auch als Monomer bezeichnet, wird unter Zugabe eines Emulgators wie beispielsweise Natriumpalmitat oder C₁₂-C₁₄ - Sulfonat in Wasser eingebracht. Die Polymerisation wird mit einem wasserlöslichen Initiator gestartet. Die Polymerisation findet nicht in den Monomertröpfchen sondern in den aus dem Emulgator gebildeten Mizellen der statt. Das Polymer fällt als fein verteilte Dispersion oder Latex an. Je nach verwendetem Monomer oder Monomergemischen werden unterschiedliche Polymer- oder Copolymerlatices erhalten. Durch Art und Menge des Emulgators wird die Teilchengröße der Latexteilchen gesteuert. Beispiele für Monomere zur Herstellung von Polymerlatizes oder Copolymerlatices sind 2-Hydroxypropylacrylat, Methacrylsäuresalz, Acrylnitril, α-Chloracrylnitril, Methacrylnitril, 2-Hydroxypropylmethacrylat, N-Vinyl-2-pyrrolidon, 1,3-Butadien, Vinylether, Acrylamid, Allylalkohol, N-Methylolacrylamid, Pentylacrylat, n-Butylacrylat, Benzylacrylat,1-Butylmethacrylat, 5-Methyl-1,3,6-heptatrien, 1,1-Dihydroperfluorbutylacrylat, Benzyl-methacrylat, 3-Oxo-n-butylacrylat, Cyclohexylacrylat, Cyclopentylacrylat, Cetylacrylat, Cyclohexylmethacrylat, Cyclopentadien, 2-Norbornylmethylacrylat, 2-Norbornylmethylmethacrylat, Ethylmethacrylat, Ethylen, Chlorstyrol, Isobutylacrylat, 2-Ethylhexylacrylat, 2-Ethylhexylmethacrylat, 2-Isobornylmethacrylat, Chloropren, n-Butyl-methacrylat, Isobutylmethacrylat, 3-Oxo-n-butylmethacrylat, Isopropylmethacrylat, Laurylacrylat, Laurylmethacrylat, Methylacrylat, Methylmethacrylat, Methylvinylketon, n-Octylacrylat, n-Octadecylacrylat, n-Octadecylmethacrylat, 2-Ethoxyethylacrylat, 2-Ethoxyethylmcthacrylat, n-Octylmethacrylat, 2-Methoxyethylmethacrylat, 2-Methoxyethylacrylat, , Ethylacrylat, Propylacrylat, Dicyclopentenylacrylat, 2,2,2-Trifluorethyl-n-Hcxylacrylat, Styrol, sec.-Butylacrylat, p-Bromostyrol, p-Chlorostyrol, p-Fluorostyrol, m-Chlorostyrol, Neohexylacrylat, Vinylacetat, Vinylchlorid, Vinylidenchlorid, m- und p-Vinyltoluol, alpha-Methylstyrol, , Acrylsäure, Methacrylsäure, Vinylsulfonsäure Na-Salz, Mono-methylitaconat, p-Styrolsulfonsäure Na-Salz, 2-Acrylamido-2-mcthylpropansulfonsäure Na-Salz, Methylenbisacrylamid, Ethylendimethacrylat, Divinylbenzol, Allylacrylat, Ethylidendiacrylat, 1,6-Hexamethylendimethacrylat, 2- Acetoacetoxyethylmethacrylat, Methacrylsäure, Acrylsäure, Methacrylamid und Triallylisocyanurat. Außerdem sind auch Latizes mit speziellem Aufbau wie core-shell Latizes oder Latizes mit Pfropfeopolymerstrukturen geeignet. Dispersionen aus Polyestern und Copolyestern, auch als Polyesterlatizes und Copolyesterlatizes bezeichnet, sind z.B. bekannt aus EP 78559 und EP 29620. Copolyesterlatizes werden durch Polykondensation aus bi- oder polyfunktionellen Alkoholen und di- oder polyfunktionellen Karbonsäuren oder polyfunktionellen Carbonsäurederivaten hergestellt. Beispiele für Dicarbonsäuren oder Dicarbonsäurederivate sind Terephthalsäure, Terephthalsäuredimethylester, Bernsteinsäure, Maleinsäure, Adipinsäuredimethylester, Cyclohexandicarbonsäure, Phthalsäuredimethylester. Beispiele für polyfunktionelle Alkohole sind Glykol, Butandiol, Hexandiol, Neopentylalkohol. Zur Herstellung von emulgierbaren oder selbstemulgierenden Copolyestern werden zusätzlich Carboxyl- oder Sulfogruppen enthaltende Dicarbonsäuren oder Dicarbonsäureester eingesetzt wie beispielsweise Sulfoisophthalsäure oder Natrium-dimethyl-5-sulfoisophtalat.

Diese Copolyester sind geeignet, um in einem Selbstemulgierprozess wässrige Dispersionen zu bilden. Die Copolyester werden in einem niedrig siedenden Lösungsmittel gelöst. Anschließend wird Wasser und ein Emulgator zugegeben und danach das Lösungsmittel abgedampft. Es werden auf diese Weise ohne Verwendung von Dispergiergeräten feindisperse Copolyesterlatizes erhalten.

Die für den erfindungsgemäßen Zweck geeigneten Polyadditionsprodukte sind vorzugsweise ionisch modifiziert. Insbesondere werden ionomere Polyadditions- oder Polykondensationsprodukte verwendet. Ionomere Polyadditionsprodukte sind aus US 6,313,196 und EP 049399 bekannt.

Die erfindungsgemäß verwendeten ionomeren Polyadditions- oder Polykondensationsprodukte enthalten pro 100 g 4 bis 180 Milliäquivalent, vorzugsweise 4 bis 100 Milliäquivalent an ionischen Gruppen bzw. an in ionische Gruppen überführbare Gruppen und gegebenenfalls 1 bis 20 Gew.-% an innerhalb einer Polyetherkette eingebauten Alkylenoxideinheiten der Formel -CH₂-CH₂-O-, wobei die Polyetherkette seitenständig oder in der Hauptkette enthalten sein kann.

Zu den erfindungsgemäß verwendbaren ionomeren Polyadditions- oder Polykondensationsprodukten, im folgenden soll hierfür der Ausdruck "ionomere Produkte" gebraucht werden, gehören Polyurethane, Polyester, Polyamide, Polyharnstoffe, Polycarbonate, Polyacetale oder Polyether, außerdem weitere ionomere Produkte, die gleichzeitig 2 oder mehreren Polymertypen angehören, wie z.B. Polyesterpolyurethane, Polyetherpolyurethane oder Polyesterpolyharnstoffe.

Ionomere Produkte, wie sie erfindungsgemäß verwendet werden, sind als solche bekannt und z.B. in Angewandte Makromolekulare Chemie 26 (1972), Seiten 45 bis 106; Angewandte Makromolekulare Chemie 82 (1979), Seiten 53 ff; J. Oil. Col. Chem. Assoc. 53 (1970), Seiten 363 beschrieben. Weitere Beschreibungen geeigneter ionomerer Produkte finden sich in den deutschen Offenlegungsschriften (DE-A-) 26 37 690, 26 42 973, 26 51 505, 2651 506, 26 59 617, 27 29 245, 27 30 514, 27 32 131, 27 34 576 und 28 11 148.

Ionomere Produkte mit anionischen Gruppen werden bevorzugt. Für das Verfahren der Erfindung in besonderer Weise geeignete ionomere Produkte werden in der DE-B2-1 472 746 beschrieben. Diesen ionomeren Produkten liegen Polyurethane zugrunde, die aus Verbindungen mit mehreren reaktionsfähigen Wasserstoffatomen mit einem Molekulargewicht von 300 bis 10 000, Polyisocyanaten und gegebenenfalls Kettenverlängerungsmitteln mit reaktionsfähigen Wasserstoffatomen erhalten werden. Bei der Herstellung dieser Polyurethane oder anschließend werden in diesen noch vorhandene Isocyanatgruppen mit einer Verbindung mit mindestens einem aktiven Wasserstoffatom und mindestens einer salzartigen oder zur Salzbildung befähigten Gruppen umgesetzt. Im Falle der Verwendung von Verbindungen mit zur Salzbildung befähigten Gruppen werden die resultierenden anionischen Polyurethane anschließend in an sich bekannter Weise mindestens teilweise in die Salzform überführt. Unter dem Begriff "salzartige Gruppe" sind bevorzugt folgende Gruppierungen zu verstehen: -SO₃⁻ oder -COO⁻.

Als Ausgangskomponenten für die Herstellung der anionischen Polyurethane sind beispielsweise die im folgenden beschriebenen Verbindungen geeignet:

### I. Verbindungen mit aktiven Wasserstoffatomen

Diese Verbindungen sind im wesentlichen linear und haben ein Molekulargewicht von etwa 300 bis 10 000, vorzugsweise 500 bis 4 000. Die an sich bekannten Verbindungen besitzen endständige Hydroxyl- und/oder Aminogruppen. Bevorzugt sind Polyhydroxylverbindungen, wie Polyester, Polyacetale, Polyether, Polyamide und Polyesteramide. Die Hydroxylzahl dieser Verbindungen entspricht etwa 370 bis 10, insbesondere 225 bis 28.

Als Polyether seien z.B. die Polymerisationsprodukte des Ethylenoxids, Propylenoxids, Tetrahydrofurans, Butylenoxids sowie ihre Misch- oder Pfropfpolymerisationsprodukte, sowie die durch Kondensation von mehrwertigen Alkoholen oder Mischungen derselben gewonnenen Kondensate und die durch Alkoxylierung von mehrwertigen Alkoholen gewonnenen Produkte genannt.

Als Polyacetale kommen z.B. die aus Hexandiol und Formaldehyd herstellbaren Verbindungen in Frage. Als Polyester, Polyesteramide und Polyamide sind die aus mehrwertigen gesättigten Carbonsäuren und mehrwertigen gesättigten Alkoholen, Aminoalkoholen, Diaminen und ihren Mischungen gewonnenen, überwiegend linearen Kondensate geeignet.

Auch bereits Urethan- oder Harnstoffgruppen enthaltende Polyhydroxylverbindungen sowie gegebenenfalls modifizierte natürliche Polyole wie Ricinusöl oder Kohlenhydrate sind verwendbar.

Selbstverständlich können zur Variation der Lyophilie bzw. der Hydrophobie und der mechanischen Eigenschaften der Verfahrensprodukte Mischungen verschiedener Polyhydroxylverbindungen eingesetzt werden.

### II. Polyisocyanate

Als Polyisocyanate sind alle aromatischen und aliphatischen Diisocyanate geeignet wie z.B. 1,5-Naphthylendiisocyanat, 4,4'-Diphenylmethandiisocyanat, 4,4'-Diphenyldimethylmethandiisocyanat, Di- und Tetraalkyldiphenylmethandiisocyanat, 4,4'-Dibenzyldiisocyanat, 1,3-Phenylendiidocyanat, 1,4-Phenylendiisocyanat, die Isomeren des Toluylendiisocyanats, gegebenenfalls in Mischung, vorzugsweise die aliphatischen Diisocyanate, Butan-1,4-diisocyanat, Hexan-1,6-diisocyanat, Dicyclohexylmethandiisocyanat, Cyclohexan-1,4-diisocyanate sowie Isophorondiisocyanat.

### III. Kettenverlänperungsmittel

Zu den Kettenverlängerungsmitteln mit reaktionsfähigen Wasserstoffatomen zählen:
1. Die üblichen Glykole, wie Ethylenglykol oder Kondensate des Ethylenglykols, Butandiol, Propandiol-1,2, Propandiol-1,3, Neopentylglykol, Hexandiol, Bis-hydroxymethylcyclohexan;
2. die aliphatischen, cycloaliphatischen und aromatischen Diamine wie Ethylendiamin, Hexamethylendiamin, 1,4-Cyclohexyldiamin, Benzidin, Diaminodiphenylmethan, die Isomeren des Phenylendiamins, Hydrazin, Ammoniak;
3. Aminoalkohole wie Ethanolamin, Propanolamin, Butanolamin;
4. polyfunktionelle Amine oder Hydroxylverbindungen wie Diethylentriamin, Triethylentetramin, Tetraethylenpentamin, Pentaethylenhexamin, Hexaethylenheptamin, Glycerin, Pentaerythrit, 1,3-Diaminoisopropanol, 1,2-Diaminopropanol, die monooxalkylierten Polyamine, wie z.B. N-Oxethylethylendiamin, N-Oxethylhydrazin, N-Oxethylhexamethylendiamin;
5. Wasser.

### IV. Zur Salzbildung befähigte Verbindungen

1. Verbindungen mit fertig ausgebildeter saurer Gruppierung.
   a) Hydroxysäurem wie beispielsweise Glycerinsäure, Milchsäure, Trichlormilchsäure, Apfelsäure, Dioxymaleinsäure, Dioxyfumarsäure, Weinsäure, Dioxyweinsäure, Zitronensäure, Dimethylolpropionsäure und Dimethylolbuttersäure, die aliphatischen, cycloaliphatischen, aromatischen und heterocyclischen Mono- und Diaminocarbonsäuren wie Glycin, α- und β-Alanin, 6-Aminocapronsäure, 4-Aminobuttersäure, die isomeren Mono- und Diaminobenzoesäuren, die isomeren Mono- und Diaminonaphthoesäuren;
   b) Hydroxy- und Carboxysulfonsäuren; 2-Hydroxyethansulfonsäure, Phenolsulfonsäure-(2), Phenolsulfonsäure-(3), Phenolsulfonsäure-(4), Phenolsulfonsäure-(2,4), Sulfoessigsäure, m-Sulfobenzoesäure, p-Sulfobenzoesäure, Benzoesäure-(1)-disulfonsäure-(3,5), 2-Chlor-benzoesäure(1)-sulfonsäure-(4), 2-Hydroxybenzoesäure-(1)-sulfonsäure(5), Naphthol-(1)-sulfonsäure, Naphthol-(1)-disulfonsäure, 8-Chlornaphtol-(1)-disulfonsäure, Naphthol-(1)-trisulfonsäure, Naphthol-(2)-sulfonsäure-(1) und Naphthol-(2)-trisulfonsäure;
   c) Aminosulfonsäuren; Amidosulfonsäure, Hydroylamin-monosulfonsäure, Hydrazindisulfonsäure, Sulfanilsäure, N-Phenylamino-methansulfonsäure, 4,6-Dichloranilin-sulfonsäure-(2), Phenylen-diamin-(1,3)-disulfonsäure-(4,6), Naphthylenamin-(1)-sulfonsäure, Naphthylamin-(2)-sulfonsäure, Naphthylamin-disulfonsäure, Naphthylamin-trisulfonsäure, 4,4'-Di-(p-aminobenzoylamino)-diphenyl-harnstoff-disulfonsäure-(3,3'), Phenylhydrazin-disulfonsäure-(2,5), Taurin, Methyltaurin, Butyltaurin, 3-Amino-benzoesäure-(1)-sulfonsäure-(5), 3-Aminotoluol-N-methansulfonsäure, 4,6-Diaminobenzol-disulfonsäure-(1,3), 2,4-Diamino-toluol-sulfonsäure-(S), 4,4'-Diaminodiphenyl-disulfonsäure-(2,2'), 2-Aminophenol-sulfonsäure-(4), 4,4'-Diamino-diphenylethersulfonsäure-(2), 2-Aminoanisol-N-methansulfonsäure, 2-Aminodiphenylamin-sulfonsäure, Ethylenglykolsulfonsäure, 2,4-Diaminobenzolsulfonsäure, N-Sulfonatoethylethylenamin;
   d) ferner gehören zu den Hydroxy- und Aminocarbonsäure und sulfonsäuren, Polycarbon- und -sulfonsäuren die (gegebenenfalls verseiften) Additionsprodukte von ungesättigten Säuren wie Acrylsäure, Methacrylsäure, Vinylsulfonsäure, Styrolsulfonsäure und ungesättigten Nitrilen wie Acrylnitril, von cyclischen Dicarbonsäureanhydriden wie Maleinsäure, Phthalsäure, Succinsäureanhydrid, von Sulfo-carbonsäureanhydriden wie Sulfoessigsäure-, o-Sulfobenzoesäureanhydrid, von Lactonen wie β-Propiolacton, γ-Butyrolacton, die Additionsprodukte von den Umsetzungsprodukten von Olefinen mit Schwefeltrioxid wie Carbylsulfat, von Epoxycarbon- und -sulfonsäuren wie Glycidsäure, 2,3-Epoxypropansulfonsäure, von Sultonen wie 1,3-Propansulton, 1,4-Butansulton, 1,8-Naphthylsulton, von cyclischen Sulfaten wie Glykolsulfat, von Disulfonsäureanhydriden wie Benzoldisulfonsäure-(1,2)-anhydrid an aliphatischen und aromatische Amine wie 1,2-Ethylendiamin, 1,6-Hexamethgylen-diamin, die isomeren Phenylendiamine, Diethylentriamin, Triethylentetramin, Tetraethylenpentamin, ferner die Additionsprodukte von Natriumhydrogensulfit an olefinisch ungesättigte Verbindungen wie Allylalkohol, Maleinsäure, Maleinsäure-bis-ethylen- und -bis-propylenglykolester;
   e) Hydrazincarbonsäuren.
2. Reaktionsfähige Verbindungen mit 3 bis 7 Ringgliedern, die salzartige oder nach der Ringöffnung zur Salzbildung befähigte Gruppen aufweisen:
   a) Dicarbonsäureanhydride wie Succinsäureanhydrid, Maleinsäureanhydrid, gegebenenfalls hydriertes Phthalsäureanhydrid;
   b) Tetracarbonsäuredianhydride wie 1,2,4,5-Benzol-tetracarbonsäureanhydrid;
   c) Disulfonsäureanhydride wie Benzoldisulfonsäure(1,2)-anhydrid;
   d) Sulfocarbonsäureanhydride wie Sulfoessigsäureanhydrid, o-Sulfobenzoesäureanhydrid;
   e) Sultone wie 1,3-Propansulton, 1,4-Butansulton, 1,8-Naphthsulton;
   f) Lactone wie β-Propiolacton, γ-Butyrolacton;
   g) Epoxycarbonsäuren wie Glycidsäuren, gegebenenfalls in Form ihrer Alkalisalze;
   h) Epoxysulfonsäuren wie 2,3-Epoxypropan-.sulfonsäure-1, gegebenenfalls in Form ihrer Alkalisalze, sowie die Addukte aus Epoxyaldehyden und Alkalihydrogensulfiten wie beispielsweise die Bisulfitverbindung des Glycidaldehyds.

Die obigen sauren Gruppierungen können in üblicher Weise durch Umsetzung mit den im folgenden genannten Verbindungen in die Salzform übergeführt werden: anorganische Basen, basisch reagierende oder basenabspaltende Verbindungen wie einwertige Metallhydroxide, -carbonate und -oxide wie Natriumhydroxid, Kaliumhydroxid, Natriumcarbonat, Kaliumcarbonat, Natriumhydrogencarbonat. Ferner organische Basen, wie tert.- Amine, z.B. Trimethylamin, Triethylamin, Dimethylaminethanol, Dimethylaminpropanol, Ammoniak und dergleichen.

Geeignete Aufbaukomponenten sind weiterhin beispielsweise innerhalb von Polyetherketten eingebaute Ethylenoxideinheiten aufweisende ein- oder zweiwertige Alkohole.

Bei Mitverwendung derartiger, monofunktioneller, nicht-ionisch hydrophiler Polyether kann es oftmals von Vorteil sein, durch Mitverwendung von mehr als difunktionellen Aufbaukomponenten einen vorzeitigen Kettenabbruch zu verhindern. Die monofunktionellen Polyether der zuletzt genannten allgemeinen Formel werden nach an sich bekannten Verfahren, wie sie beispielsweise in den US-Patentschriften 3 905 929, 4 190 566 oder 4 237 264 beschrieben sind, hergestellt.

Solche Aufbaukomponenten verleihen den erfindungsgemäß zu verwendenden Polyurethanen zusätzliche, punktuelle Hydrophilierung, Elektrolytstabilität, Gefrierstabilität und verbesserte Gleiteigenschaften.

Die Menge der Polyisocyanate wird vorzugsweise so gewählt, dass alle mit Isocyanatgruppen reaktionsfähigen Gruppen reagieren.

Die Umsetzung wird gegebenenfalls unter Mitverwendung von Lösungsmitteln durchgeführt, wobei niedrig siedende Lösungsmittel mit einem Siedepunkt kleiner als 120°C, wie beispielsweise Aceton, Methylethylketon, Acetonitril, Tetrahydrofuran, Dioxan, vorzugsweise geeignet sind, die gegebenenfalls anteilig Wasser enthalten können. Als Lösungsmittel für anorganische Basen und Verbindungen mit mindestens einem mit Isocyanatgruppen reagierenden Wasserstoff und mindestens einer salzartigen oder zur Salzbildung befähigten Gruppe kann Wasser gegebenenfalls ohne Zusätze organischer Lösungsmittel verwendet werden.

Die überwiegend linearen hochmolekularen anionischen Polyurethane fallen im allgemeinen als klare bis schwach opaleszierende Lösungen in den genannten polaren Lösungsmitteln an. Ihr Feststoffgehalt beträgt etwa 5 bis 50 Gew.-% an ionischem Polyurethan. Vorzugsweise werden Polyester- oder Polyether- Polyurethane verwendet.

Die mittlere Teilchengröße der Dispersionen der erfindungsgemäß verwendeten Polymerisations- Polykondensations- oder Polyadditionsprodukte liegt im Bereich von 30 nm bis 1000 nm vorzugsweise im Bereich von 50 nm bis 200 nm. Es sind sowohl homodisperse als auch polydiperse Dispersionen verwendbar.

Die Herstellung der erfindungsgemäß verwendeten Metallsalz-Nanogel enthaltenden (wasserfesten Polymerisations- Polykondensations- oder Polyadditionsprodukte soll durch die folgenden Beispiele erläutert werden.

### Beispiele

### Herstellung wässriger Dispersionen (D-II) eines Polymerisations-, Polykondensations- oder Polyadditionsproduktes

### Polymerdispersion 1

Unter Durchleitung von Stickstoff wird eine Lösung aus 1,0 g Dowfax 2A1, ein Emulgator der Fa. Dow Chemical Company, und 350 g Wasser auf 90°C erwärmt. Bei pH 6 -7 dosiert man in diese Lösung innerhalb von 2 Stunden gleichzeitig a) eine Mischung aus 20 g Methylmethacrylat und 30 g Butylacrylat und b) 50 g einer 1 %-igen wässrigen auf pH 7 eingestellten Azobiscyanvaleriansäurelösung. Danach werden weitere 4 Stunden bei 90°C gerührt. Nach Abdestillieren von 50 g Wasser wird ein feinteiliger Latex erhalten. Der Feststoffgehalt wird durch Zugabe von Wasser eingestellt.

| | |
|---|---|
| Daten: | Feststoff: 10 Gew.-% |
| | Teilchengröße: 75 nm |

### Polymerdispersion 2

Unter Durchleitung von Stickstoff wird eine Lösung aus 800 mg Dodecylbenzolsulfonat und 250 g Wasser auf 90°C erwärmt. Bei pH 6 -7 dosiert man in diese Lösung innerhalb von 2 Stunden gleichzeitig 50 g Styrol und 50 g einer 1 %-igen wässrigen auf pH 7 eingestellten Kaliumperoxodisulfatlösung. Danach werden weitere 4 Stunden bei 90°C gerührt. Nach Abdestillieren von 40 g Wasser wird ein feinteiliger Polystyrollatex erhalten. Der Feststoffgehalt wird durch Zugabe von Wasser eingestellt.

| | |
|---|---|
| Daten: | Feststoff: 15 Gew.-% |
| | Teilchengröße: 60 nm |

### Polymerdispersion 3

407,4 g (0,2396 mol) Hexandiol/Neopentylglykolpolyadipat werden bei 120°C im Wasserstrahlvakuum entwässert. Bei 70-80°C wird mit 77,7 g (0,4625 mol) 1,6-Diisocyanatohexan versetzt und bei 100°C 1,5 h nachgerührt. Das Präpolymer hat einen NCO-Gehalt von 3,4 %. Nach 33 %-igem Einlösen in Aceton wird bei 50°C mit 75,0 g (0,1924 mol) 2-Aminoethyl-β-aminopropionsäure-Na-Salz (39,5 %-ig in Wasser) versetzt und nach 7 min mit 1160 ml vollentsalztem Wasser dispergiert. Nach Abdestillieren des Acetons im Wasserstrahlvakuum erhält man eine sehr feinteilige Dispersion.

| | |
|---|---|
| Daten: | Feststoff: 30 Gew.-% |
| | Teilchengröße: 60 nm |

### Herstellung wässriger Dispersionen (D-I) aus Metallsalz-Nanogelen nach einem 3-stufigen Verfahren.

### Stufe I

Unter Stickstoff wurden 23 g einer 45 %igen wäßrigen Lösung von Natriumdodecyldiphenyletherdisulfonat zu 3400 g entionisiertem Wasser gegeben. Bei 75°C werden dann unter kräftigem Rühren 200 g eines Monomerengemisches aus 1245 g Methylacrylat und 100 g frisch destilliertem Trivinylcyclohexan zugefügt. Nach 10 Minuten werden dazu 88 g einer Lösung aus 8,25 g Kaliumperoxodisulfat in 260 g Wasser (Initiatorlösung) und anschließend bei 80 bis 83 °C gleichzeitig der Rest der Initiatorlösung hinzugegeben. Nach 30 Minuten wird die Mischung mit einer Lösung von 88 mg tert. Butylhydroperoxid und 440 mg Natriumdodecyldiphenyletherdisulfonat in 4,5 g destilliertem Wasser sowie mit einer Lösung von 800 mg Ascorbinsäure in 87 g destilliertem Wasser versetzt und weitere 2 Stunden bei 80 bis 83°C gerührt. Geringe Mengen an ausgefallenem Polymerisat werden abfiltriert. Es wird ein vernetzter Acrylatlatex erhalten.

### Stufe II

Zu 2560 g des nach Stufe **I** hergestellten Latex werden 101 g Kaliumhydroxid in 4000 g destilliertem Wasser und nach 7-stündigem Rühren weitere 223 g Kaliumhydroxid in 875 ml Wasser zugegeben, worauf die Mischung weitere 20 Stunden bei Siedetemperatur gerührt wird, bis der pH bei 10 liegt. In dem so erhaltenen Latex liegen die Acrylateinheiten in Form des Kaliumsalzes vor. Der Latex wird dialysiert und auf einen Feststoffgehalt von 15 Gew.% eingestellt.

### Stufe III

### A: Kupfer(II)salz Nanogel enthaltende Dispersion

50 g Latex der Stufe **II** mit einem Feststoffgehalt von 15 Gew.% werden innerhalb von 30 Minuten mit einer Lösung aus 0,50 g Kupfer-II-sulfat-pentahydrat in 10,0 g Wasser verrührt. Man erhält ein Kupfer-II-ionen enthaltendes Nanogel als wässrige Dispersion.

### B: Eisen(II)salz Nanogel enthaltende Dipersion

500 g Latex der Stufe **II** mit einem Feststoffgehalt von 15 Gew.% werden innerhalb von 30 Minuten unter Stickstoff mit einer Lösung aus 12,3 g Eisen-II-chlorid-tetrahydrat in 250 ml Wasser verrührt. Anschließend wird die Dispersion 48 Stunden dialysiert. Man erhält ein Eisen-II-ionen enthaltendes Nanogel als wässrige Dispersion.

### Anwendungsbeispiel 1

10 g Polymerdispersion **3** werden mit 10 g Wasser verdünnt. Dazu tropft man unter Rühren 5g des Kupfer-II-ionen enthaltenden wässrig dispergierten Nanogels **A**. Es wird eine wässrige Kupfer-II-ionen enthaltende Beschichtungslösung erhalten (Dispersion vom Typ (**D-III**)).

Eine PET-Folie wird mit dieser Beschichtungslösung mit einem Handrakel beschichtet und bei Raumtemperatur getrocknet. Es wird eine völlig transparente schwach blau gefärbte Kupfer-II-ionen aufweisende Folie erhalten. Die Folie ist wasserfest, biozid und zeigt eine Sperrwirkung gegenüber Ammoniak und Aminen. Die Kupferionen sind in der Beschichtung der Folie homogen verteilt.

### Anwendungsbeispiel 2

Zu 40 g Polymerdispersion **1** tropft man unter Rühren 5g des Kupfer-II-ionen enthaltenden wässrigen Nanogels **A**. Es wird eine wässrige Kupfer-II-ionen enthaltende Beschichtungslösung erhalten (Dispersion vom Typ (**D-III**)).

Eine Polycarbonat-Folie wird mit dieser Beschichtungslösung mit einem Handrakel beschichtet und bei 60°C getrocknet. Es wird eine völlig transparente schwach blau gefärbte Kupfer-II-ionen aufweisende wasserfeste und biozide Folie erhalten. Die Kupferionen sind in der Beschichtung der Folie homogen verteilt.

## Patentansprüche

1. Verfahren zur Herstellung einer Metallionen enthaltenden wässrigen Dispersion (**D-III**), **dadurch gekennzeichnet, dass** eine wässrige Metallsalz-Nanogel enthaltende Dispersion (**D-I**) mit einer wässrigen Dispersion (**D-II**) eines Polymerisations-, Polykondensations- oder Polyadditionsproduktes abgemischt wird, wobei es sich bei dem Metallsalz-Nanogel um polymere Teilchen mit einen Durchmesser der volumengleichen Kugel von maximal etwa 500 nm handelt, die wenigstens ein anionisch geladenes Polymer und als Gegenionen positive Ionen, insbesondere wenigstens eines Metalls oder eines Metallkomplexes aufweisen, wobei das anionisch geladene Polymer bezüglich der Gesamt-Molmenge der in dem Polymer enthaltenen Monomere von etwa 1 bis 100 Mol-% kovalent gebundene anionische Gruppen aufweist, und von der Gesamt-Molmenge der Gegenionen zwei- und/oder mehrwertige Ionen von etwa 1 bis 100 Mol-% ausmachen.

2. Verfahren nach Anspruch 1, **dadurch gekennzeichnet, dass** die Polymerisation zur Herstellung der Metallsalz-Nanogel enthaltenden Dispersion (**D-I**) in Gegenwart wenigstens eines bi- oder polyfunktionellen vernetzend wirkenden Monomers durchgeführt wird.

3. Verfahren nach einem der voranstehenden Ansprüche, **dadurch gekennzeichnet, dass** die Metallsalz-Nanogel enthaltende Dispersion (**D-I**) nach einem wenigstens dreistufigen Verfahren hergestellt wird, wobei zunächst (i) eine vernetzte Methacrylsäureester- oder Acrylsäureester-Einheiten umfassende Dispersion hergestellt wird, danach (ii) die Säureestergruppen zumindest teilweise durch Zugabe von Alkalimetall- oder Ammoniumhydroxid alkalisch hydrolysiert werden und anschließend (iii) die Alkalimetall- oder Ammoniumhydroxidionen zumindest teilweise durch mehrwertige Ionen ersetzt werden.

4. Verfahren nach einem der voranstehenden Ansprüche, **dadurch gekennzeichnet, dass** es sich bei den mehrwertigen Metallionen um Ionen von Magnesium, Calcium, Strontium, Barium, Eisen, Kobalt, Nickel, Kupfer, Zink, Blei, Cadmium, Zinn, Quecksilber, Wismut, Gold, Uran, Aluminium, Antimon, Cer, Chrom, Europium, Gallium, Germanium, Indium, Lutetium, Mangan, Neodym, Osmium, Palladium, Platin, Plutonium, Radium, Rhenium, Rhodium, Rubidium, Ruthenium, Samarium, Scandium, Tantal, Tellur, Terbium, Thallium, Thorium, Thulium, Titan, Wolfram, Uran, Vanadium, Ytterbium und/oder Zircon handelt und wobei die Metallionen auch komplex gebunden sein können.

5. Wässrige Dispersion **D-III,** herstellbar mit einem der voranstehenden Verfahren.

6. Wässrige Dispersion **D-III** nach Anspruch 5 mit antimikrobieller Wirkung.

7. Verfahren zur Herstellung eines festen Zwischenprodukts, **dadurch gekennzeichnet, dass** aus der wässrigen Dispersion gemäß Anspruch 5 oder 6 Wasser entfernt wird.

8. Festes Zwischenprodukt, herstellbar mit dem Verfahren nach Anspruch 7.

9. Verfahren zur Herstellung eines wasserfesten Produkts, **dadurch gekennzeichnet, dass** die wässrige Dispersion nach Anspruch 5 oder 6 oder das feste Zwischenprodukt nach Anspruch 8 Bedingungen ausgesetzt werden, bei denen sie zumindest teilweise koaleszieren.

10. Wasserfestes Produkt, herstellbar mit einem Verfahren nach Anspruch 9.

11. Gegenstand oder Zubereitung, umfassend eine wässrige Dispersion nach Anspruch 5 oder 6 und/oder ein festes Zwischenprodukt nach Anspruch 8 und/oder ein wasserfestes Produkt nach Anspruch 10.

12. Gegenstand oder Zubereitung nach Anspruch 11, wobei es sich um Formkörper, Beschichtungsmassen, Folien oder einen Masterbatch zur funktionalen Ausrüstung von Kunststoffen handelt.

13. Gegenstand oder Zubereitung nach Anspruch 11 oder 12, wobei der Gegenstand oder die Zubereitung nach Anspruch 11 eine Barriere- und/oder Absorptionswirkung gegenüber Sauerstoff, Feuchte, chemische, insbesondere gasförmige Verbindungen, elektromagnetische oder radioaktive Strahlung besitzt.

14. Verwendung des Gegenstands oder der Zubereitung nach Anspruch 13 als Barriere gegen und/oder zur Absorption von Sauerstoff, Feuchte, chemische, insbesondere gasförmige Verbindungen, elektromagnetische oder radioaktive Strahlung.

15. Verwendung des Gegenstands oder der Zubereitung nach einem der Ansprüche 11 bis 13 als Griff, Glas- oder Kunststoffscheibe, Brillenglas, Kontaktlinse, Lebensmittelfolie, Elektronikschutzfolie, Medikamentenverpackung, Schalter, Geländer, Tastenkappe, Tastatur, Toilettendeckel, Toilettenbürste, Duscharmatur, Telefonhörer, Kinderspielzeug, insbesondere Plastikspielzeug, Folien, Fasern, Gewebe, Textilien, Wandbeschichtungen, Wandbekleidungen, Dichtmassen, Dachpfannen und Dämmmaterialien, Behälter und Geräte für die Pflanzenzucht sowie generell keimfrei zu haltender Behälter oder Umhüllungen wie z.B. Petrischalen, Wassertanks, Wasserrohre oder Isolierzelte; oder andere Produkte mit häufig berührten oder Keimen ausgesetzten Oberflächen; oder Produkte mit Empfindlichkeit gegenüber elektrischen Aufladungen, Sauerstoff, Feuchte, chemische, insbesondere gasförmige Verbindungen, elektromagnetische oder radioaktive Strahlung.

## Claims

1. A method of preparing an aqueous dispersion (**D-III**) comprising metal ions, **characterized in that** an aqueous dispersion (**D-I**) comprising metal salt nanogel is blended with an aqueous dispersion (**D-II**) of a polymerization product, polycondensation product or polyaddition product, whereby that the metal salt nanogel is in the form of polymeric particles having a diameter of the equal-volume spheres of not more than about 500 nm, which contain at least one anionically charged polymer and, as counterions, positive ions, more particularly of at least one metal or metal complex and whereby in terms of the total molar amount of the monomers present in the polymer, the anionically charged polymers contain from about 1 to 100 mol% of covalently bonded anionic groups and whereby of the total molar amount of the counterions ions with a valency of two and/or more make up from about 1 to 100% mol%.

2. The method of claim 1, **characterized in that** the polymerization for preparing the dispersion (**D-I**) comprising metal salt nanogel is carried out in the presence of at least one difunctional or polyfunctional crosslinking monomer.

3. The method of either of the preceding claims, **characterized in that** the dispersion (**D-I**) comprising metal salt nanogel is prepared by an at least three-stage method, where first of all (i) a dispersion comprising crosslinked methacrylic ester or acrylic ester units is prepared, thereafter (ii) the ester groups are subjected to at least partial alkaline hydrolysis by addition of alkali metal hydroxide or ammonium hydroxide, and subsequently (iii) the alkali metal or ammonium hydroxide ions are at least partly replaced by polyvalent ions.

4. The method according to any of the preceding claims, **characterized in that** the polyvalent metal ions are ions of magnesium, calcium, strontium, barium, iron, cobalt, nickel, copper, zinc, lead, cadmium, tin, mercury, bismuth, gold, uranium, aluminum, antimony, cerium, chromium, europium, gallium, germanium, indium, lutetium, manganese, neodymium, osmium, palladium, platinum, plutonium, radium, rhenium, rhodium, rubidium, ruthenium, samarium, scandium, tantalum, tellurium, terbium, thallium, thorium, thulium, titanium, tungsten, uranium, vanadium, ytterbium and/or zirconium, it also being possible for the metal ions to be bound in complex form.

5. An aqueous dispersion **D-III** producible by one of the preceding methods.

6. An aqueous dispersion **D-III** according to Claim 5, having an antimicrobial effect.

7. A method of producing a solid intermediate, **characterized in that** water is removed from the aqueous dispersion of claim 5 or 6.

8. A solid intermediate producible by the method of claim 7.

9. A method of producing a water-resistant product, **characterized in that** the aqueous dispersion of claim 5 or 6 or the solid intermediate of claim 8 are subjected to conditions under which they undergo at least partial coalescence.

10. A water-resistant product producible by a method of claim 9.

11. An article or preparation comprising an aqueous dispersion of claim 5 or 6 and/or a solid intermediate of claim 8 and/or a water-resistant product of claim 10.

12. The article or preparation of claim 11, comprising molding, coating materials, films or a Masterbatch for the functional treatment of plastics.

13. The article or preparation according to any of claims 11 to 12, the article or the preparation of claim 11 possessing a barrier effect and/or absorption effect with respect to oxygen, moisture, chemical compounds, more particularly gaseous compounds, electromagnetic radiation or radioactive radiation.

14. The use of the article or of the preparation of claim 13 as a barrier to and/or for the absorption of oxygen, moisture, chemical compounds, more particularly gaseous compounds, electromagnetic radiation or radioactive radiation.

15. The use of the article or preparation of any of claims 11 to 13 as a handle, glass sheet or polymeric sheet, spectacle lens, contact lens, food film, electronic protection film, medicinal product packaging, switch, railings, keycap, keyboard, toilet lid, toilet brush, shower fitting, telephone receiver, child's toy, more particularly plastic toy, films, fibers, woven fabrics, textiles, wall coatings, wall coverings, sealants, roof shingles, and insulating materials, containers and apparatus for plant breeding and also, generally, containers or surrounds to be kept germ-free, such as, for example, Petri dishes, water tanks, water pipes or isolation tents; or other products with surfaces that are frequently touched or are subject to germs; or products with sensitivity toward electrical charges, oxygen, moisture, chemical compounds, more particularly gaseous compounds, electromagnetic radiation or radioactive radiation.

## Revendications

1. Procédé de préparation d'une dispersion aqueuse (D-III) contenant des ions métalliques, **caractérisé en ce qu'**on mélange une dispersion aqueuse (D-I) contenant un nanogel de sels métalliques à une dispersion aqueuse (D-II) d'un produit de polymérisation, de polycondensation ou de polyaddition, dans lequel pour ce qui concerne le nanogel de sels métalliques, il s'agit de particules polymères ayant un diamètre maximal de la sphère de même volume d'environ 500 nm, qui comprennent au moins un polymère anioniquement chargé et, en tant que contre-ions, des ions positifs, en particulier au moins d'un métal ou d'un complexe métallique, dans lequel le polymère anioniquement chargé comportent, par rapport à la quantité totale en moles des monomères contenus dans le polymère, d'environ 1 à 100 % en moles de groupes anioniques à liaison covalente et de la quantité totale en moles des contre-ions des ions divalents et/ou polyvalents représentent d'environ 1 à 100 % en moles.

2. Procédé selon la revendication 1, **caractérisé en ce que** la polimérisation de préparation de la dispersion (D- I) contenant un nanogel de sels métalliques est réalisée en présence d'au moins un monomère à action réticulante, bi- ou polyfonctionnel.

3. Procédé selon l'une des revendications précédentes, **caractérisé en ce que** la dispersion (D-I) contenant un nanogel de sels métalliques est préparée par un procédé en au moins trois étapes, dans lequel tout d'abord (i) on prépare une dispersion comprenant des motifs réticulés d'esters de l'acide méthacrylique ou de l'acide acrylique, puis (ii) on hydrolyse au moins partiellement, dans des conditions alcalines, les groupes ester d'acide par addition d'hydroxyde d'un métal alcalin ou d'hydroxyde d'ammonium, et puis (iii) on remplace les ions d'hydroxyde d'un métal alcalin ou d'ammonium, au moins partiellement, par des ions polyvalents.

4. Procédé selon l'une des revendications précédentes, **caractérisé en ce que**, pour ce qui concerne les ions métalliques polyvalents, il s'agit d'ions du magnésium, du calcium, du strontium, du baryum, du fer, du cobalt, du nickel, du cuivre, du zinc, du plomb, du cadmium, de l'étain, du mercure, du bismuth, de l'or, de l'uranium, de l'aluminium, de l'antimoine, du cérium, du chrome, de l'europium, du pallium, du germanium, de l'indium, du lutétium, du manganèse, du néodyme, de l'osmium, du palladium, du platine, du plutonium, du radium, du rhénium, du rhodium, du rubidium, du ruthénium, du samarium, du scandium, du tantale, du tellure, du terbium, du thallium, du thorium, du thulium, du titane, du tungstène, de l'uranium, du vanadium, de l'ytterbium et/ou du zirconium, les ions métalliques pouvant aussi être liés d'une manière complexe.

5. Dispersion aqueuse D-III pouvant être préparée par l'un des procédés précédents.

6. Dispersion aqueuse D-III selon la revendication 5 ayant un effet antimicrobien.

7. Procédé de préparation d'un produit intermédiaire solide, **caractérisé en ce qu'**on élimine l'eau de la dispersion aqueuse selon la revendication 5 ou 6.

8. Produit intermédiaire solide pouvant être fabriqué par le procédé selon la revendication 7.

9. Procédé de fabrication d'un produit résistant à l'eau, **caractérisé en ce qu'**on expose la dispersion aqueuse selon la revendication 5 ou 6, ou le produit intermédiaire solide selon la revendication 8 à des conditions dans lesquelles ils vont au moins partiellement subir une coalescence.

10. Produit résistant à l'eau, pouvant être fabriqué par un procédé selon la revendication 9.

11. Objet ou préparation comprenant une dispersion aqueuse selon la revendication 5 ou 6, et/ou un produit intermédiaire solide selon la revendication 8 et/ou une produit résistant à l'eau selon la revendication 10.

12. Objet ou préparation selon la revendication 11, pour ce qui concerne lequel il s'agit d'objets moulés, de masses de revêtement, de feuilles ou d'un mélange-maître pour traitement fonctionnel de matières plastiques.

13. Objet ou préparation selon l'une des revendications 11 à 12, l'objet ou la préparation selon la revendication 11 ayant un effet barrière et/ou d'absorption vis-à-vis de l'oxygène, de l'humidité, des composés chimiques, en particulier gazeux, du rayonnement électromagnétique ou radioactif.

14. Utilisation de l'objet ou de la préparation selon la revendication 13 en tant que barrière à l'oxygène, à l'humidité, aux composés chimiques, en particulier gazeux, au rayonnement électromagnétique ou radioactif, et/ou pour l'absorption de ceux-ci.

15. Utilisation de l'objet ou de la préparation selon l'une des revendications 11 à 13 en tant que poignée, vitre en verre ou matière plastique, verre de lunettes, lentille de contact, feuille alimentaire, feuille de protection en électronique, emballage de médicament, interrupteur, rampe, capuchon de touche, clavier, couvercle de toilettes, brosse de toilettes, robinetterie de douche, écouteurs téléphoniques, jouets pour enfants, en particulier jouets en plastique, feuilles, fibres, tissus, textiles, revêtements muraux, tentures murales, masses d'étanchéité, pannes de toit et matériaux d'isolation, récipients et appareils pour la sélection végétale, ainsi que d'une manière générale des récipients ou enveloppes devant être maintenus stériles, tels que par exemple les boîtes de Pétri, les réservoirs d'eau, les canalisations d'eau ou les tentes isolantes ; ou d'autres produits ayant des surfaces souvent touchées ou exposées à des germes ; ou des produits ayant une sensibilité aux charges électriques, à l'oxygène, à l'humidité, aux composés chimiques, en particulier gazeux, au rayonnement électromagnétique ou radioactif.
